Europäisches Patentamt

European Patent Office

Office européen des brevets

(11) Numéro de publication: **0 296 948**
**A1**

(12) **DEMANDE DE BREVET EUROPEEN**

(21) Numéro de dépôt: **88401518.1**

(22) Date de dépôt: **17.06.88**

(51) Int. Cl.⁴: **H 04 N 9/82**

(30) Priorité: **26.06.87 FR 8709071**

(43) Date de publication de la demande:
**28.12.88 Bulletin 88/52**

(84) Etats contractants désignés:
**AT BE CH DE ES GB GR IT LI LU NL SE**

(71) Demandeur: **EDUVISION S.A.**
**31, Cours des Juilliottes B.P. No.58**
**F-94702 Maisons-Alfort Cédex (FR)**

(72) Inventeur: **Nabati, Bahman**
**19, rue Emile Dubois**
**F-75014 Paris (FR)**

**Broussaud, Georges**
**43, avenue Jean Racine**
**F-92330-Sceaux (FR)**

(74) Mandataire: **Bugnon-Hays, Claudine**
**PATCO S.A. 10, rue Vivienne**
**F-75002 Paris (FR)**

(54) **Procédé de stockage d'images de haute définition sur vidéodisque, codeur et décodeur pour la mise en oeuvre dudit procédé.**

(57) La présente invention concerne un procédé de stockage d'images de haute définition sur un support de type vidéodisque, consistant à enregistrer sur des spires préférentiellement consécutives les signaux correspondant aux images partielles composant ladite image de haute définition.

Les images partielles enregistrées présentent un recouvrement horizontal d'au moins un point par ligne.

Lesdits points de recouvrement sont supprimés lors de la recomposition de l'image de haute définition.

La présente invention concerne également un codeur pour l'enregistrement d'images de haute définition selon le procédé, ainsi qu'un décodeur pour la restitution de telles images de haute définition

FIG.1

EP 0 296 948 A1

Bundesdruckerei Berlin

## Description

### Procédé de stockage d'images de haute définition sur vidéodisque, codeur et décodeur pour la mise en oeuvre dudi procédé

La présente invention concerne un procédé de stockage d'images de haute définition sur un support de type vidéodisque, ainsi que les codeurs et les décodeurs destinés à la mise en oeuvre dudit procédé.

La présente invention concerne plus particulièrement un procédé d'enregistrement et de restitution d'images de haute définition décomposées en plusieurs images partielles justiciables chacune de l'analyse selon les standards de la télévision.

Il est connu de recourir à un vidéodisque standard destiné à l'enregistrement et à la restitution d'images d'une définition de 525 ou 625 lignes, conformément aux standards actuels de la télévision, pour le stockage d'images fixes de haute ou de très haute définition, c'est-à-dire de plus de 1 000 lignes par image.

Selon une technique décrite par les inventeurs, notamment dans l'ouvrage "les vidéodisques", publié en 1986 aux éditions MASSON, l'image de haute définition est divisée en plusieurs images partielles de basse définition, chacune d'entre elles étant enregistrée sur une spire d'un vidéodisque.

Le passage à un standard de 1249 lignes est ainsi obtenu en divisant ladite image de haute définition en 4 images partielles de 625 lignes.

Un dispositif inséré entre la sortie du lecteur de vidéodisque et un moniteur de haute définition recompose une image de haute définition à partir de 4 images partielles.

La recomposition rigoureuse des images partielles présente des difficultés en raison de la persistance d'une zone de raccord se présentant sous la forme d'une bande verticale d'une largeur de quelques pixels. Notamment, dans le cas d'une image de haute définition comportant des régions à illumination uniforme, caractérisée par une luminance et une chrominance rigoureusement constante de part et d'autre de la frontière verticale entre deux images partielles, il est quasiment impossible de maintenir le niveau de luminance constante tout au long des lignes.

En effet, du fait des régimes transitoires significatifs des discontinuités qui marquent le début et la fin de chacune des lignes d'une image de télévision, le signal correspondant présente une croissance ou une décroissance exponentielle dont la constante de temps est égale à l'inverse de la bande passante de l'amplificateur vidéo.

De plus, le temps d'établissement du régime permanent significatif, dans le cas d'une série de lignes blanches, augmente encore la largeur de la zone de perturbation de luminance.

Si l'effet est inappréciable pour le téléspectateur lorsqu'il affecte les extrémités droite et gauche de l'écran, il devient inacceptable s'il se situe en plein milieu de l'image, surtout dans le cas d'images de haute définition censée répondre à des impératifs de qualité.

La présente invention a pour objet de remédier à cet inconvénient.

Le procédé de stockage d'images de haute définition selon la présente invention, consiste à effectuer la découpe de l'image de départ avec un recouvrement d'au moins un point par ligne, les points de recouvrement étant supprimés lors de la reconstruction de l'image de haute définition à partir des images partielles de basse définition.

Les points de recouvrement permettent l'établissement du régime permanent, lesdits points de recouvrement correspondant sensiblement au régime transitoire étant supprimés lors de la restitution de l'image de haute définition finale. Le procédé selon la présente invention permet ainsi une continuité horizontale satisfaisante des images partielles.

Selon un mode de mise en oeuvre particulier, l'image de départ de haute définition est convertie en un signal numérique, ledit signal numérique étant réparti en au moins deux blocs comportant au moins un point commun par ligne, chacun desdits blocs étant ensuite retranscrit en analogique en vue d'un enregistrement sur des spires préférentiellement consécutives d'un vidéodisque.

Le présent mode de réalisation présente l'avantage d'un découpage numérique de l'image de départ, procédé qui facilite le traitement informatique et conduit à une bonne reproductibilité du procédé.

Selon un autre mode de réalisation, la saisie de l'image de départ de haute définition est réalisée à l'aide d'un système optique le décomposant en au moins deux images partielles présentant un recouvrement horizontal, les signaux correspondant auxdites images partielles étant ensuite enregistrés sur des spires préférentiellement consécutives d'un vidéodisque.

Le présent mode de mise en oeuvre permet notamment d'utiliser des capteurs de basse définition.

L'image de départ est découpée en quatre, soit en deux séries de deux images partielles se recouvrant horizontalement. Ce découpage permet de restituer une image de haute définition de 1249 lignes à partir du stockage d'images de définition standard de 625 lignes.

La suppression des points de recouvrement horizontal lors de la restitution s'effectue par décalage de l'origine des points mémoires associés à la représentation numérique des images de basse définition.

Ce mode de réalisation permet un traitement simplifié des signaux numériques et une reconstruction satisfaisante d'une image de haute définition en vue de sa restitution sur un moniteur de haute définition ou de tout type de transmission.

Le nombre de points de recouvrement est compris entre 5 points par ligne et 10 points par ligne. Le temps d'établissement du régime permanent correspond en effet sensiblement, compte tenu des vitesses de balayage standard, à environ 7 points par ligne.

La présente invention concerne également un décodeur pour la restitution d'images fixes de haute définition à partir des signaux analogiques délivrés par un lecteur de vidéodisque de type standard. Ledit décodeur comporte des moyens d'asservissement et de contrôle du lecteur de vidéodisque, des convertisseurs analogiques/numériques, des mémoires destinées à la mémorisation des signaux numériques correspondant aux images patielles, des moyens de traitement desdits signaux numériques et des convertisseurs numériques/analogiques délivrant un signal exploitable par un périphérique standard, par exemple un moniteur de haute définition.

Le décodeur selon la présente invention se connecte sur les sorties habituelles d'un lecteur standard de vidéodisque, qui ne nécessite de fait aucune modification de son architecture interne.

La présente invention concerne également un codeur comportant un convertisseur analogique/numérique, une mémoire destinée à la mémorisation des signaux numériques correspondant à l'image de haute définition, des moyens de traitement destinés à décomposer l'image de haute définition en images partielles présentant un recouvrement horizontal des mémoires de stockage des signaux numériques correspondant aux images partielles, des convertisseurs numériques/analogiques et des moyens d'asservissement et de contrôle de l'enregistreur.

Le codeur comporte, en outre, un codeur PAL délivrant un signal compatible avec les caractéristiques de l'enregistreur.

D'autres particularités et avantages de l'invention apparaîtront clairement dans la description suivante présentée à titre d'exemple non limitatif.

La figure 1 représente une vue d'une image découpée selon la présente invention.

La figure 2 représente le diagramme d'un codeur selon la présente invention.

La figure 3 représente le diagramme d'un décodeur selon la présente invention.

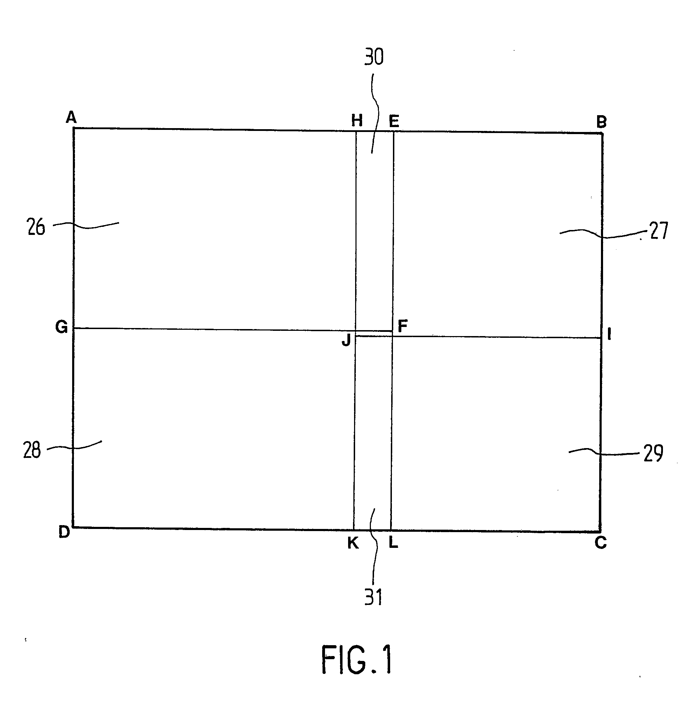

La figure 1 représente un exemple de découpage de l'image de départ en 4 images de basse définition, par exemple de 625 lignes. Dans ce cas, l'image est restituée avec une définition de 1249 lignes.

L'image de départ A B C D est découpée optiquement ou électroniquement en 4 images partielles : (26), délimitée par les points A E F G, (27), délimitée par les points H B I J, (28), délimitée par les points G F L D, (29), délimitée par les points J I C K. Les images partielles présentent un recouvrement horizontal partiel.

Ainsi, les deux images partielles supérieures présentent une bande de recouvrement (30), délimitée par les points H E F G, et les deux images partielles inférieures présentent une bande de recouvrement (31), délimitée par les points J F L K.

La largeur desdites bandes de recouvrement est de 7 pixels, correspondant sensiblement au temps d'établissement d'un régime permanent lors de la restitution des images partielles.

Cette perte de qualité existe bien entendu également sur les bords externes de l'image mais elle est généralement inobservable par le spectateur.

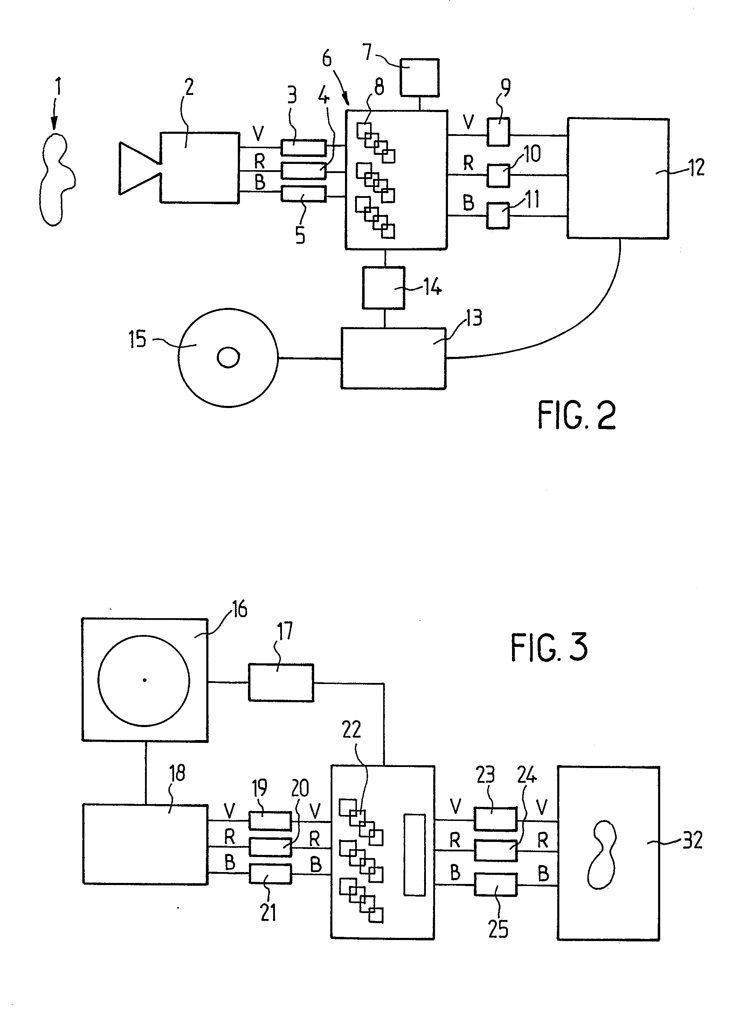

La figure 2 représente le diagramme du processus de codage.

L'image de départ (1) est captée par une caméra (2) de type connue à haute définition, par exemple 1249 lignes.

Elle délivre trois signaux analogiques V,R,B, correspondant aux trois couleurs fondamentales qui sont numérisés à l'aide de trois convertisseurs analogiques/numériques (3), (4), (5).

Les trois images numériques de haute définition sont réparties chacune en quatre blocs mémoires (8) d'une mémoire de stockage (6) dont le contenu informationnel correspond à une image partielle de basse définition.

Des moyens de traitement informatique (7) ont pour objet de procéder au découpage électronique de l'image de haute définition et de les répartir dans les différents blocs mémoires en assurant le stockage des points de recouvrement dans les mémoires correspondantes.

On dispose ainsi de trois séries de quatre images numériques aux normes usuelles, qui sont retranscrites en analogique par trois convertisseurs numériques/analogiques (9), (10), (11), délivrant des signaux standard de basse définition, par exemple 625 lignes et de 4 MHz de bande passante. Ces signaux sont ensuite préférentiellement codés selon un système de multiplexage des couleurs adoptées par les vidéodiques, généralement selon le système PAL, par un codeur (12), avant d'être enregistrés séquentiellement sur un support intermédiaire à l'aide d'un enregistreur (13).

Un circuit d'asservissement et de contrôle (14) assure la commande de l'enregistreur et le transfert successif des quatre séquences de signaux S correspondant aux quatre images partielles de basse définition. Les quatre images partielles sont ensuite transférées sur un vidéodisque (15) et enregistrées sur quatre spires consécutives selon des techniques connues.

La figure 3 représente le diagramme de principe du décodeur destiné à compléter un lecteur de vidéodisque (16) de type standard.

Le disque, une fois pressé à partir du support intermédiaire portant l'enregistrement des signaux codés à l'aide d'un codeur selon la présente invention, peut être lu par tout lecteur standard.

Un dispositif d'asservissement et de contrôle (17) donne l'ordre d'aller rechercher la séquence de quatre images partielles de basse définition correspondant à une image de haute définition déterminée.

Le signal SV est décodé par un décodeur PAL (18). Les trois signaux R, V, B, sont ensuite numérisés à l'aide de trois convertisseurs analogiques/numériques (19), (20), (21).

Les images numériques partielles sont stockées dans trois séries de quatre blocs mémoires (22) d'une capacité d'environ 225 kilooctets chacun. Par un traitement informatique, une image numérique de haute définition est reconstruite. Ledit traitement consiste essentiellement à reconstruire ligne par ligne l'image de haute définition, en supprimant les premiers points de chaque ligne correspondant aux zones de recouvrement des images partielles successives, par exemple en décalant l'origine des adresses mémoires des blocs mémoires correspondant aux images partielles comportant des points de recouvrement.

L'image de haute définition ainsi reconstruite est ensuite convertie en signaux analogiques par trois convertisseurs numériques/analogiques (23), (24), (25) qui peuvent être exploités par un périphérique de haute définition standard (31), par exemple un moniteur de haute définition.

La présente description est donnée à titre d'exemple non limitatif. L'invention s'étend à toutes les variantes de mises en oeuvre, notamment à la saisie des images partielles par découpage optique de l'image de haute définition de départ. Elle s'étend également à toutes les formes particulières de traitement informatique des images numériques.

## Revendications

1) Procédé de stockage d'images de haute définition sur un support de type vidéodisque, consistant à enregistrer sur des spires préférentiellement consécutives les signaux correspondant aux images partielles composant l'image de haute définition, caractérisé en ce que les images partielles enregistrées (26, (27), (28), (29), présentent un recouvrement horizontal d'au moins un point par ligne et que lesdits points de recouvrement sont supprimés lors de la recomposition de l'image de haute définition à partir des images partielles enregistrées sur le vidéodisque.

2) Procédé de stockage d'images de haute définition sur un support de type vidéodisque selon la revendication 1, caractérisé en ce que l'image de haute défintion est convertie en un signal numérique, ledit signal numérique étant réparti en au moins deux blocs comportant au moins un point commun par ligne, chacun desdits blocs étant ensuite retranscrit en analogique en vue d'un enregistrement sur des spires préférentiellement consécutives d'un vidéodisque.

3) Procédé de stockage d'images de haute définition sur un support de type vidéodisque selon la revendication 1, caractérisé en ce que la saisie de l'image de départ de haute définition est réalisée à l'aide d'un système optique 1a décomposant en au moins deux images partielles présentant un recouvrement horizontal, les signaux correspondant auxdites images partielles étant ensuite enregistrés sur les spires préférentiellement consécutives d'un support de type vidéodisque.

4) Procédé de stockage d'images de haute définition sur un support de type vidéodisque selon l'une quelconque des revendications 1 à 3, caractérisé en ce que l'image de haute définition est décomposée en au moins quatre images partielles correspondant à un découpage horizontal et à un découpage vertical, les images partielles horizontales se recouvrant d'au moins un point par ligne.

5) Procédé de stockage d'images de haute définition sur un support du type vidéodisque selon l'une quelconque des revendications 1 à 4, caractérisé en ce que, lors de la restitution de l'image de haute définition stockée sur le vidéodisque, les images partielles sont lues selon les techniques habituelles, les signaux correspondant sont numérisés et mémorisés, les points de recouvrement sont supprimés et l'image de haute définition est convertie en un signal analogique après reconstruction.

6) Procédé de stockage d'images de haute définition sur un support du type vidéodisque selon la revendication 5, caractérisé en ce que les points de recouvrement sont supprimés par décalage de l'origine des points mémoires associés à la représentation numérique des images partielles.

7) Procédé de stockage d'images de haute définition sur un support du type vidéodisque selon l'une quelconque des revendications 1 à 5, caractérisé en ce que le nombre de points de recouvrement par ligne est compris entre 5 et 10.

8) Décodeur pour la restitution d'images de haute définition à partir des signaux analogiques délivrés par un lecteur de vidéodisque de type connu pour la mise en oeuvre du procédé selon l'une quelconque des revendications 5 à 7, caractérisé en ce qu'il comporte des moyens d'asservissement et de contrôle du lecteur de vidéodisque (16), un décodeur PAL (18) convertissant le signal délivré par le lecteur de vidéodisque en trois signaux analogiques, des convertisseurs analogiques/numériques (19), (20), (21), des mémoires (22) destinées à la mémorisation des signaux numériques correspondant aux images partielles, des moyens de traitement desdits signaux numériques et des convertisseurs numériques/analogiques (23), (24), (25), délivrant un signal exploitable par un périphérique de haute définition standard (31).

9) Codeur pour l'enregistrement d'une image de haute définition en vue de la mise en oeuvre du procédé selon la revendication 2, caractérisé en ce qu'il comporte des convertisseurs analogiques/numériques (3), (4), (5), une mémoire (6) destinée à la mémorisation des signaux numériques correspondant à l'image de haute définition, des moyens de traitement (7) destinés à décomposer l'image de haute définition en images partielles présentant un recouvrement horizontal, des mémoires de stockage (8) des signaux numériques correspondant aux images partielles, des convertisseurs numériques/analogiques (9), (10), (11), et des moyens d'asservissement et de contrôle (14) de l'enregistreur (13).

10) Codeur pour la saisie d'une image de haute définition selon la revendication 9, caractérisé en ce qu'il comporte une série de circuits par couleur, ainsi qu'un codeur PAL (12) délivrant un signal compatible avec l'enregistreur.

FIG.1

0296948

FIG. 2

FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-4 139 869 (A.W. HOLT) * Colonne 2, ligne 60 - colonne 3, ligne 2; colonne 3, lignes 57-65; colonne 5, ligne 50 - colonne 6, ligne 12; colonne 10, ligne 61 - colonne 11, ligne 13; colonne 11, ligne 50 - colonne 12, ligne 22 * | 1,2 | H 04 N 9/82 |
| A | | 3-5,8-10 | |
| Y | DE-A-3 304 787 (SIEMENS AG) * Page 5, lignes 17-35; page 10, lignes 11-21; revendications 1,2 * | 1,2 | |
| A | | 3-5,7-10 | |
| A | FR-A-2 115 150 (IBM CORP.) * Page 1, lignes 1-26,30-36; page 2, lignes 1-36; page 5, ligne 33 - page 6, ligne 10 * | 1-5,9 | |
| A | FR-A-2 476 949 (THOMSON-CSF) * Page 1, ligne 30 - page 2, ligne 10; page 3, ligne 20 - page 4, ligne 7; page 4, lignes 16-21 * | 2-4,8 | DOMAINES TECHNIQUES RECHERCHES (Int. Cl.4) H 04 N |
| A | PATENT ABSTRACTS OF JAPAN, vol. 9, no. 216 (E-340)[1939], 3 septembre 1985; & JP-A-60 75 179 (SONY K.K.) 27-04-1985 --- -/- | 8-10 | |

Le présent rapport a été établi pour toutes les revendications

| Lieu de la recherche | Date d'achèvement de la recherche | Examinateur |
|---|---|---|
| LA HAYE | 19-08-1988 | BOSCH F.M.D. |

Office européen
des brevets

**RAPPORT DE RECHERCHE EUROPEENNE**

Numero de la demande

EP 88 40 1518

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | IEEE TRANS. ON CONSUMER ELECTRONICS, vol. CE-22, no. 4, novembre 1976, pages 332-334; G.C. KENNEY: "Special purpose applications of the optical videodisc system" <br> * Page 333, colonne de droite, lignes 17-52 * <br> --- | 1,2,4,5 ,8,9 | |
| D,A | G. BROUSSAUD: "Les vidéodisques", Annexe: "Vidéodisque haute définition", 1986, pages 163-167, Masson, Paris, FR <br> * En entier * <br> ----- | 1-5,8- 10 | |
|  |  |  | **DOMAINES TECHNIQUES RECHERCHES (Int. Cl.4)** |

Le présent rapport a été établi pour toutes les revendications

| Lieu de la recherche | Date d'achèvement de la recherche | Examinateur |
|---|---|---|
| LA HAYE | 19-08-1988 | BOSCH F.M.D. |